# EUROPÄISCHE PATENTSCHRIFT

(11) **EP 0 514 749 B1**
(45) Veröffentlichungstag und Bekanntmachung des Hinweises auf die Patenterteilung: **26.04.1995**
(21) Anmeldenummer: 92108033.9
(22) Anmeldetag: 13.05.1992
(51) Int. Cl.: F16L 37/08

(54) **Handbrause**
Hand shower
Douche à main

(30) Priorität: 24.05.1991 DE 4116932
(43) Veröffentlichungstag der Anmeldung: 25.11.1992
(73) Patentinhaber: FRIEDRICH GROHE AKTIENGESELLSCHAFT, D-58675 Hemer (DE)
(72) Erfinder: Heimann, Bruno, W-5758 Fröndenberg-Ardey (DE); Haufe, Rudolf, verstorben (DE); Gransow, Eckhard, W-5758 Fröndenberg (DE); Bischoff, Bernd, W-5870 Hemer (DE)

(56) Entgegenhaltungen:
- WO-A-90/10814
- DE-A- 2 731 525
- DE-A- 2 827 847
- FR-A- 2 450 589
- FR-A- 2 654 489

## Beschreibung

Die Erfindung betrifft eine Handbrause mit wenigstens einer Brausestrahlerzeugungseinrichtung und einem Handgriff, an dem ein lösbarer Anschluß für eine Schlauchleitung zur Zuführung des Brausewassers vorgesehen ist.

Derartige Handbrausen sind bekannt. Außerdem ist es aus der DE-OS 28 27 847 bekannt, zum schnellen An- und Abschließen verschiedener Handbrausen an einen Brauseschlauch, eine separate Steckkupplung vorzusehen, wobei das Steckteil der Kupplung an das Anschlußgewinde der Handbrause und das Mutterstück mit den Riegelbügeln über ein Gewinde an den Brauseschlauch angeschlossen wird.
Bei dieser bekannten Anordnung ergeben sich jedoch durch die zusätzliche Kupplung relativ große Baumaße. Außerdem erfordert das Anschlußgewinde an der Handbrause ein Anschlußstück der Kupplung, das im Querschnitt kreisförmig ausgebildet ist, so daß das Dichtschrauben unabhängig von dem Drehwinkel erfolgen kann. Schließlich werden nicht selten für Handbrausen mit unterschiedlich gestalteter Oberfläche entsprechend oberflächengestaltete Kupplungen gewünscht, was eine relativ große Lagerhaltung erfordert.

Der Erfindung liegt die Aufgabe zugrunde, die im Oberbegriff des Anspruchs 1 angegebene Handbrause zu verbessern.
Diese Aufgabe wird erfindungsgemäß dadurch gelöst, daß in dem Handgriff eine Schnellkupplung für einen Stecker der Schlauchleitung vorgesehen ist, wobei wenigstens ein Querriegelbügel für die Kupplung des Steckers in dem Handgriff radial begrenzt verschiebbar angeordnet ist.
Weitere Ausgestaltungen der Erfindung sind in den Ansprüchen 2 bis 11 angegeben.

Mit den vorgeschlagenen Maßnahmen wird erreicht, daß die Schnellkupplung unmittelbar im Griff der Handbrause integriert wird, so daß eine separate Kupplung nicht mehr erforderlich ist. Das separate Gehäuse für die Riegelbügel kann völlig entfallen. Die unterschiedlichen Handbrausen können durch einfaches Umstecken an einem Brauseschlauch verwendet werden.
In weiterer Ausgestaltung der Erfindung kann die Handbrause so ausgebildet werden, daß die Querriegelbügel und das Wasserführungsrohr nur durch Stecken bzw. Zusammenfügen verbunden werden, ohne daß ein Schweißen erforderlich ist. Die vorzugsweise paarweise eingesetzten Querriegelbügel sind dabei so ausgebildet, daß zwei identisch gleiche Querriegelbügel miteinander verschachtelt werden, so daß die beiden Querriegelbügel radial zueinander verschiebbar, aber axial festliegend als Paket anordbar sind. Die beiden, ein Paket bildenden Querriegelbügel sind mit ihrer Drucktaste diametral gegenüberliegend angeordnet, wobei die beiden Querriegelbügel entgegen der Federkraft radial so weit ineinander geschoben werden können, daß das Paket von einer stromaufwärts angeordneten Öffnung durch den Handgriff bis zum Anschlag an einen Ringbund eingeschoben werden kann. Besonders zweckmäßig ist hierbei die Ausbildung des Handgriffs aus einer Unter- und Oberschale, wobei die Unterschale einen rohrförmigen, stromaufwärts gelegenen Endbereich aufweist, in die das Paket von Querriegelbügeln einfach einzuschieben ist und von dem einzufügenden separaten Wasserführungsrohr in der Stecklage gesichert wird.
Durch die Anordnung des separaten Wasserführungsrohrs, in das der Stecker der Kupplung direkt gedichtet eingeführt ist, ist erreicht, daß das sichtbare Gehäuse des Handgriffs bzw. der Handbrause aus einem Werkstoff hergestellt werden kann, der nicht den Trinkwasservorschriften entsprechen muß. Darüber hinaus kann das Gehäuse durch die Unterteilung in Ober- und Unterschale äußerst kostengünstig mehrfarbig hergestellt werden.

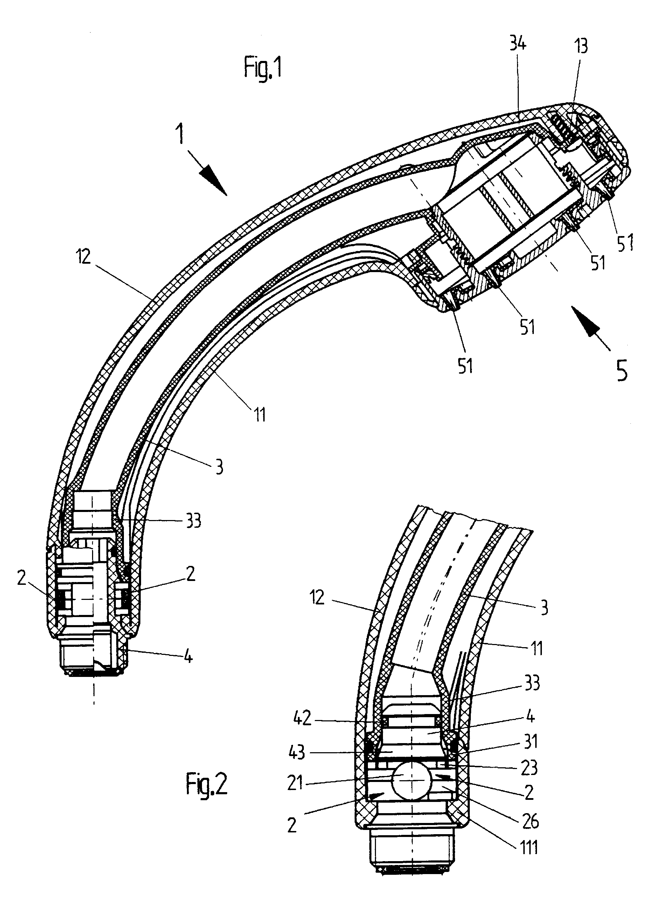

Ein Ausführungsbeispiel der Erfindung ist in der Zeichnung dargestellt und wird im folgenden näher beschrieben. Es zeigt
- Figur 1: eine Handbrause im Längsschnitt;
- Figur 2: einen Teil der Handbrause gemäß Figur 1 in vergrößerter Darstellung, wobei die Querriegelbügel und der Stecker in Seitenansicht dargestellt sind;
- Figur 3: einen Teil der Handbrause gemäß Figur 1 um 90° gedreht in vergrößerter Darstellung mit eingerasteten Querriegelbügeln;
- Figur 4: die Handbrause gemaß Figur 3 in der Schnittebene IV;
- Figur 5: die Handbrause gemäß Figur 1 um 90° gedreht in vergrößerter Darstellung, wobei die Querriegelbügel in einer entriegelten Stellung zum Stecker dargestellt sind;
- Figur 6: die Handbrause gemäß Figur 5 in der Schnittebene VI;
- Figur 7: den in Figur 1 gezeigten Querriegelbügel in vergrößerter Darstellung in Draufsicht;
- Figur 8: den Querriegelbügel gemäß Figur 7 in Seitenansicht;
- Figur 9: den Querriegelbügel gemäß Figur 7 um 90° gedreht;
- Figur 10: den Querriegelbügel gemäß Figur 7 um 180° gedreht;
- Figur 11: die in Figur 1 gezeigte Oberschale im Schnitt;
- Figur 12: die in Figur 1 gezeigte Unterschale im Schnitt;
- Figur 13: das in Figur 1 gezeigte Wasserführungsrohr im Schnitt;
- Figur 14: den in Figur 1 gezeigten Stecker im Halbschnitt.

Die in den Figuren gezeigte Handbrause besteht aus einem Handgriff 1, der gleichzeitig das Gehäuse für die Handbrause bildet. Der Handgriff 1 ist aus einer Unterschale 11 und einer Oberschale 12 zusammenfügbar und weist einen ovalen oder ellipsenförmigen Querschnitt auf. In dem Handgriff 1 ist an der stromaufwärts gelegenen Seite ein Stecker 4 einfügbar, der in der Stecklage mit Querriegelbügeln 2 axial im Handgriff 1 fixierbar ist. Stromabwärts hinter den Querriegelbügeln 2 ist ein Wasserführungsrohr 3 angeordnet, in das der Stecker 4 mit einem O-Ring gedichtet einführbar ist. Das Wasserführungsrohr 3 mündet stromabwärts in der Brausestrahlerzeugungseinrichtung 5. Zur Erzeugung der Brausestrahlen ist ein Brauseboden 50 vorgesehen, in dem auf Lochkreisen Strahldüsen 51 angeordnet sind.

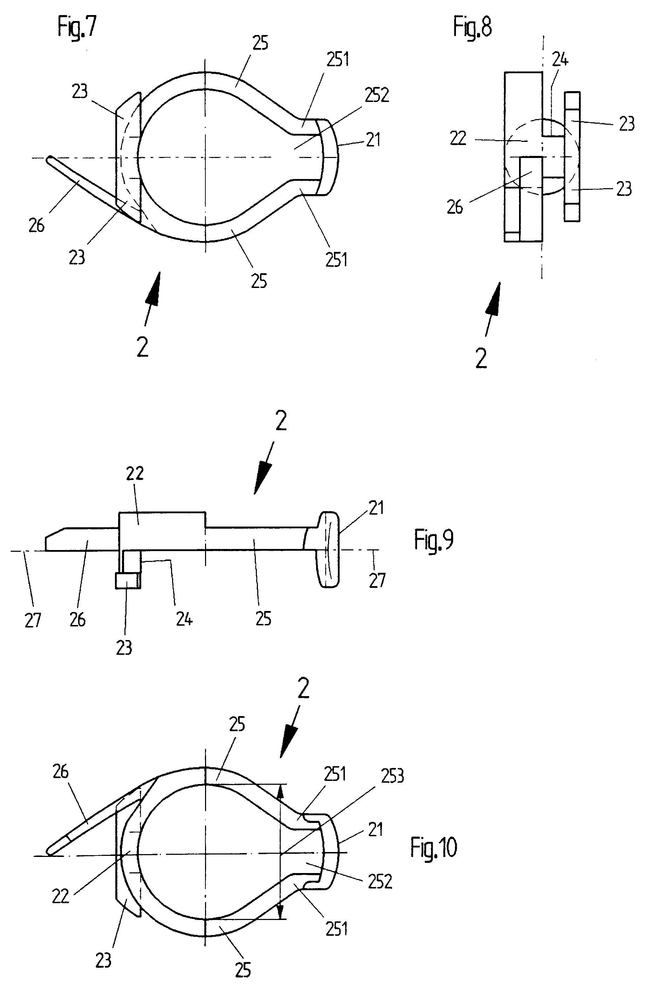

Die Querriegelbügel 2 sind paarweise als Paket im rohrförmigen Bereich 113 der Unterschale 11 eingeschoben und liegen axial an einem Ringbund 111 an. Die beiden Querriegelbügel 2 sind identisch gleich ausgebildet und werden um 180° zueinander verdreht miteinander verschachtelt angeordnet. Jeder Querriegelbügel 2 weist etwa eine tropfenförmige Gestalt auf - wie es insbesondere aus Figur 7 und 10 zu entnehmen ist - und ist einstückig aus Kunststoff im Spritzgußverfahren hergestellt. Der Querriegelbügel 2 weist einen Riegelbogen 22 auf, der mit einer Ringnut 41 des Steckers 4 zusammenwirkt, und an dessen beiden Seiten sich jeweils ein Ringbereich 25 anschließt. Dem Riegelbügel 22 diametral gegenüberliegend ist eine Drucktaste 21 ausgebildet, deren kreisförmige Betätigungsfläche einen Durchmesser von etwa 10 mm aufweist. Zur Anlenkung der beiden Ringbereiche 25 an die Drucktaste 21 sind diese mit zylindrischen Endbereichen 251 versehen, die dem Durchmesser der Drucktaste 21 entsprechen. Die Ringbereiche 25 sind einseitig an die Drucktaste 21 angelenkt, wie es insbesondere aus Figur 9 zu entnehmen ist. Im Bereich des Riegelbogens 22 ist, auf der Mittellinie beginnend, ein Verbindungssteg 24 angeformt, der eine Führungslasche 23 trägt. Die beiden Ringbereiche 25 sind in bezug auf den Riegelbogen 22 um die Dicke der Führungslasche 23 verjüngt ausgebildet, wie es aus Figur 9 zu entnehmen ist. Außerdem ist im Bereich des Riegelbogens 22 eine Feder 26 einstückig angeformt. Die etwa T-förmig auf dem Verbindungssteg 24 angeordnete Führungslasche 23 weist eine maximale Länge auf, die geringfügig kleiner ist als der Öffnungsdurchmesser 253 des Querriegelbügels 2. Die Länge des Verbindungsstegs 24 ist dabei so bemessen, daß die Führungslasche 23 des einen Querriegelbügels 2 die beiden Ringbereiche 25 übergreift.
Die beiden identisch gleich ausgebildeten Querriegelbügel 2 werden zur Paketanordnung mit ihren Drucktasten 21 diametral gegenüberliegend aneinander angelagert, wobei nunmehr spiegelbildlich die jeweilige Führungslasche 23 axial durch den Öffnungsdurchmesser 253 durch den jeweils anderen Querriegelbügel 2 axial eingeschoben und danach durch radiales Verschieben gegeneinander in den axial sprungartig verringerten Ringbereich 25 gebracht, wobei nunmehr die beiden Querriegelbügel 2 miteinander verhakt bzw. verschachtelt und symmetrisch zur Mittelachse 27 angeordnet sind. Die Feder 26 des einen Querriegelbügels 2 liegt dabei an der Drucktaste 21 des anderen Querriegelbügels 2 an, so daß die beiden Querriegelbügel 2 von den Drucktasten 21 aus zueinander entgegen der Federkraft verschoben werden können. Im Endbereich 251 ist ein Freiraum 252 ausgebildet, der so bemessen ist, daß der eine Verbindungssteg 24 von dem anderen Querriegelbügel 2 aufgenommen werden kann.

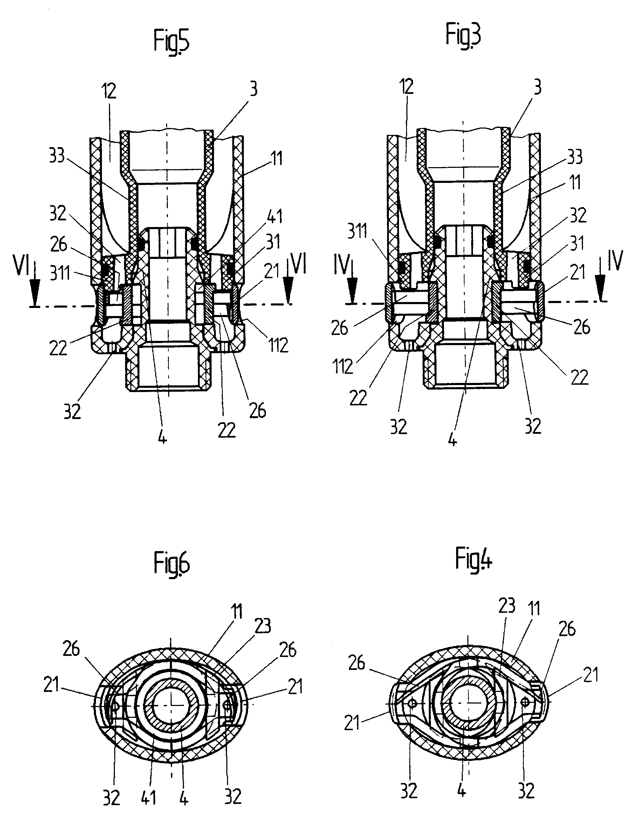

An der stromabwärts gelegenen Stirnseite der Querriegelbügel 2 ist das Wasserführungsrohr 3 mit einem Flansch 31 angelagert. Der Flansch 31 weist eine Außenmantelfläche auf, die der Innenmantelfläche des rohrförmigen Bereichs 113 entspricht. Darüber hinaus weist der Flansch 31 Anschläge 311 auf, mit denen die Eindrücktiefe der Drucktasten 21 in der Handbrause begrenzt werden. Außerdem ist im Bereich des Flansches 31 ein Mundstück 33 für die dichte Aufnahme des Steckers 4 ausgebildet. An dem stromabwärts gelegenen Endbereich des Wasserführungsrohrs 3 ist eine topfartige Aufnahme 34 für die Anordnung der Brausestrahlerzeugungseinrichtung 5 ausgebildet. Zur Entlüftung und/oder Entwässerung aus dem Bereich zwischen dem Wasserführungsrohr 3 und dem Handgriff 1 sind in dem Flansch 31 und der Stirnseite des Handgriffs 1 Öffnungen 32 ausgebildet, wie es insbesondere aus Figur 3 und 5 zu entnehmen ist.

Die Handbrause kann in folgender Weise zusammengefügt werden:
Zunächst werden zwei Querriegelbügel 2 zu einem Paket zusammengefügt, wobei die Drucktasten 21 diametral zueinander angeordnet sind und jeweils die Führungslasche 23 des einen Querriegelbügels 2 durch den Durchmesserbereich des anderen Querriegelbügels 2 axial hindurchgesteckt und danach radial zueinander verschoben, so daß die beiden Teile miteinander verhakt, d.h. axial zueinander gesichert sind, aber radial zueinander entgegen der Kraft der Federn 26 verschoben werden können.

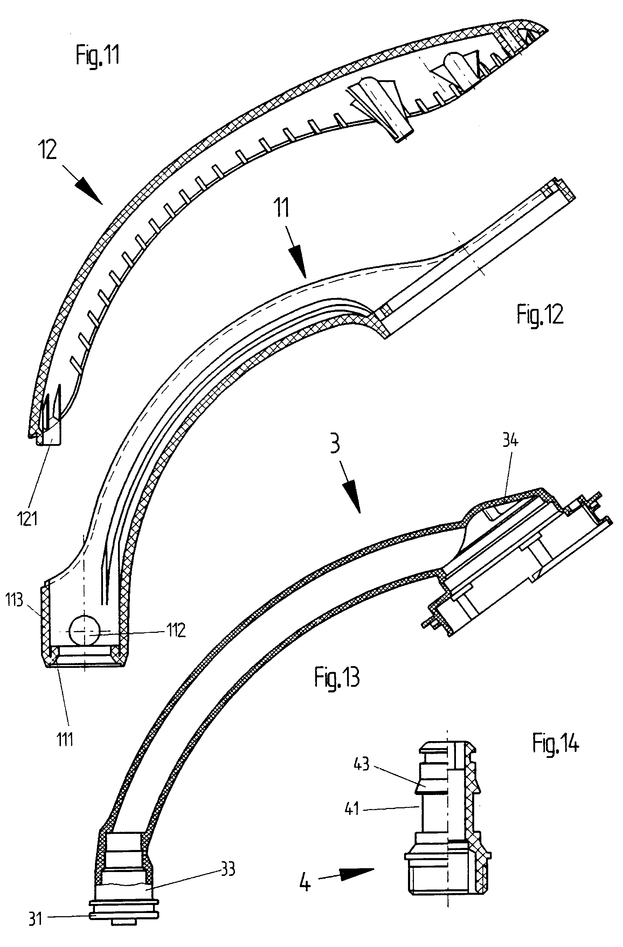

Hiernach können die beiden zu einem Paket zusammengefügten Querriegelbügel 2 soweit gegeneinander verschoben werden, bis jeweils ein Verbindungssteg 24 des einen Querriegelbügels 2 von dem Freiraum 252 des anderen Querriegelbügels 2 aufgenommen ist. In dieser Stellung können die beiden Querriegelbügel 2 in den rohrförmigen Bereich 113 der Unterschale 11 (Figur 12) eingeschoben werden, bis sie axial an dem Ringbund 111 zur Anlage gelangen. In diesem Bereich sind außerdem zwei diagonal gegenüberliegende Radialöffnungen 112 in der Unterschale 11 ausgebildet, so daß nunmehr die beiden Querriegelbügel 2 durch die beiden Federn 26 radial zueinander verschoben und die Drucktasten 21 durch die Radialöffnungen 112 hindurchgeschoben werden, bis der Ringbereich 25 am Endbereich 251 an der Innenwandung des Handgriffs 1 zur Anlage gelangt.
Sodann kann das Wasserführungsrohr 3 in die Unterschale 11 eingelegt werden, wobei dann der Flansch 31 die Axialsicherung der beiden miteinander verhakten Querriegelbügel 2 bewerkstelligt und am Umfang des Flansches ein elastisches Element, z.B. O-Ring, als Spielausgleich vorhanden ist.
Schließlich kann die Oberschale 12 auf die Unterschale 11 aufgebracht werden, wobei dann einerseits ein Kragen 121 der Oberschale 12 im rohrförmigen Bereich 113 der Unterschale 11 einfaßt und andererseits mittels Schrauben 13 oder Schnappen die Verbindung im Bereich der topfartigen Aufnahme 34 zwischen der Oberschale 12, der Unterschale 11 und dem Wasserführungsrohr 3 herstellbar ist.

Nun kann die Brausestrahlerzeugungseinrichtung 5 in die Aufnahme 34 eingesetzt werden.
Hiernach ist die Handbrause betriebsbereit. Der Stecker 4 (Figur 14) kann nunmehr, nachdem er mit einer Schlauchleitung verbunden ist, an der stromaufwärts gelegenen Stirnseite des Handgriffs 1 eingeschoben werden, eindringt und mit einem Konus 43 die beiden Querriegelbügel 2 radial zueinander verschiebt, so daß nach dem völligen Einschieben die Querriegelbügel 2 mit jeweils ihrem Riegelbogen 22 in die Ringnut 41 einschnappen und den Stecker 4 axial aber drehbar zum Handgriff 1 fixieren. In dieser Stellung ist außerdem der verjüngte Bereich des Steckers in das Mundstück 33 des Wasserführungsrohrs 3 eingeführt, wobei mit dem O-Ring 42 eine dichte Verbindung hergestellt ist.
Werden dagegen die beiden diametral gegenüberliegenden Drucktasten von einem Benutzer betätigt, so wird die axiale Verriegelung des Steckers 4 aufgehoben und die Handbrause kann von der Schlauchleitung mit dem Stecker 4 abgenommen werden.

## Patentansprüche

1. Handbrause mit wenigstens einer Brausestrahlerzeugungseinrichtung und einem Handgriff, an dem ein lösbarer Anschluß für eine Schlauchleitung zur Zuführung des Brausewassers vorgesehen ist, dadurch gekennzeichnet, daß in dem Handgriff (1) eine Schnellkupplung für einen Stecker (4) der Schlauchleitung vorgesehen ist, wobei wenigstens ein Querriegelbügel (2) für die Kupplung des Steckers (4) in dem Handgriff (1) radial begrenzt verschiebbar angeordnet ist.

2. Handbrause nach Anspruch 1, dadurch gekennzeichnet, daß in dem Handgriff (1) ein separates Wasserführungsrohr (3) zur Brausestrahlerzeugungseinrichtung (5) vorgesehen ist, in das der Stecker (4) stirnseitig gedichtet einführbar und in der Stecklage von der Schnellkupplung axial fixiert ist.

3. Handbrause nach Anspruch 1 oder 2, dadurch gekennzeichnet, daß zwei aufeinanderliegende Querriegelbügel (2) vorgesehen sind, die von einer stromabwärts angeordneten Öffnung in den Handgriff (1) bis zum Anschlag an einen Ringbund (111) einschiebbar und von dem einsetzbaren Wasserführungsrohr (3) mit seiner Stirnseite in der eingeschobenen Position axial gesichert sind.

4. Handbrause nach einem der Ansprüche 1 bis 3, dadurch gekennzeichnet, daß die Querriegelbügel (2) mit jeweils einer Drucktaste (21) durch jeweils eine Radialöffnung (112) im Handgriff (1) hindurchgeführt sind.

5. Handbrause nach Ansprüche 4, dadurch gekennzeichnet daß der Querriegelbügel (2) in Draufsicht etwa tropfenförmige Gestalt aufweist und einstückig aus Kunststoff hergestellt ist, wobei an dem verjüngten Bereich die Drucktaste (21) angeformt ist.

6. Handbrause nach einem der Ansprüche 1 bis 5, dadurch gekennzeichnet, daß die Querriegelbügel (2) jeweils einen Riegelbogen (22) für den Eingriff in eine Ringnut (41) des Steckers (4) aufweisen, an dem an der einen Stirnseite eine Führungslasche (23) T-förmig angeformt ist, wobei ein Verbindungssteg (24) zur Führungslasche (23) eine derartige Länge hat, daß die beiden Ringbereiche (25) des gegenüberliegenden zweiten Querriegelbügels (2) von der Führungslasche (23) übergriffen sind, so daß die beiden Querriegelbügel (2) radial zueinander verschiebbar, aber axial festliegend zu einem Paket zusammenfügbar sind.

7. Handbrause nach einem der Ansprüche 4 bis 6, dadurch gekennzeichnet, daß die Drucktasten (21) eine etwa kreisförmige Betätigungsfläche von ca. 10 mm Durchmesser aufweisen und die beiden Ringbereiche (25) des Querriegelbügels (2) an der einen Hälfte der Betätigungsfläche angeformt sind, wobei die beiden Ringbereiche (25) mit einem der Mantelfläche der Radialöffnung (112) entsprechenden zylindrischen Endbereich (251) ausgerüstet sind.

8. Handbrause nach Anspruch 7, dadurch gekennzeichnet, daß in dem Endbereich (251) ein Freiraum (252) für die Aufnahme des Verbindungsstegs (24) des anderen Querriegelbügels (2) vorgesehen ist.

9. Handbrause nach einem der Ansprüche 2 bis 8, dadurch gekennzeichnet, daß der Handgriff (1) aus einer Unter- und einer Oberschale (11,12) gebildet ist, wobei die Unterschale (11) stromaufwärts einen rohrförmigen Bereich (113) zur Aufnahme der Querriegelbügel (2) und des Anschlußteils des Wasserführungsrohrs (3) hat, während die Oberschale (12) einerseits einen Kragen (121) zum Einstecken in die Unterschale (11) aufweist, so daß nach dem Einsetzen der Querriegelbügel (2) und des Wasserführungsrohrs (3) die Unter- und Oberschale (11,12) im Bereich der Brausestrahlerzeugungseinrichtung (5) mittels Schrauben (13) oder Schnappen verbindbar ist.

10. Handbrause nach einem der Ansprüche 2 bis 9, dadurch gekennzeichnet, daß das Wasserführungsrohr (3) am stromaufwärts gelegenen Ende einen Flansch (31) aufweist, dessen Außenmantelfläche etwa der Innenmantelfläche des Handgriffs (1) entspricht, wobei an der Außenmantelfläche Anschläge (311) zur Begrenzung der Eindrücktiefe der Drucktasten (21) vorgesehen sind.

11. Handbrause nach einem der Ansprüche 1 bis 10, dadurch gekennzeichnet, daß in der stromaufwärts gelegenen Stirnseite des Handgriffs (1) und/oder in dem Flansch (31) Öffnungen (32) zur Atmosphäre vorgesehen sind.

## Claims

1. A hand-held spray head having at least one device for producing spray jets of fluid and a hand grip on which a detachable connection for a hose line for the supply of the spray water is provided, characterized in that in the hand grip (1) there is provided a rapid-action coupling for a connector plug (4) of the hose line, at least one transverse locking clip (2) for the coupling of the connector plug (4) being arranged in the hand grip (1) so as to be displaceable radially to a limited extent.

2. A hand-held spray head according to claim 1, characterized in that in the hand grip (1) there is provided a separate water supply pipe (3) to the device (5) for producing the spray jets, in which pipe an end of the connector plug (4) is arranged to be inserted, sealed, and in the plugged-in position is axially fixed by the rapid-action coupling.

3. A hand-held spray head according to claim 1 or 2, characterized in that two transverse locking clips (2) lying one on top of the other are provided, which clips are arranged to be pushed into the hand grip (1) from an opening located downstream until they bear against an annular collar (111) and are axially secured in the pushed-in position by the end face of the insertable water supply pipe (3).

4. A hand-held spray head according to one of claims 1 to 3, characterized in that the transverse locking clips (2) are each guided with a push button (21) through a respective radial opening (112) in the hand grip (1).

5. A hand-held spray according to claim 4, characterized in that the transverse locking clip (2) is approximately tear-drop shape in plan view and is manufactured in one piece from plastics material, the push button (21) being integrally moulded at the tapered region thereof.

6. A hand-held spray head according to one of claims 1 to 5, characterized in that the transverse locking clips (2) each have a curved catch member (22) for engagement in an annular groove (41) of the connector plug (4), on which member at the one end face thereof there is integrally formed a T-shaped guide lug (23), wherein a connecting member (24) to the guide lug (23) is of such a length that the guide lug (23) engages over the two annular regions (25) of the second transverse locking clip (2) lying opposite, so that the two transverse locking clips (2) are displaceable radially with respect to one another but can be assembled to form a unit that is axially fixed.

7. A hand-held spray head according to one of claims 4 to 6, characterized in that the push buttons (21) have an approximately circular operating surface of about 10 mm diameter and the two annular regions (25) of the transverse locking clip (2) are integrally formed with one half of the annular operating surface, the two annular regions (25) being provided with a cylindrical end region (251) corresponding to the outer surface of the radial opening (112).

8. A hand-held spray head according to claim 7, characterized in that in the end region (251) there is provided a free space (252) for receiving the connecting member (24) of the other transverse locking clip (2).

9. A hand-held spray head according to one of claims 2 to 8, characterized in that the hand grip (1) is formed from a lower and an upper half (11, 12), the lower half (11) having upstream a tubular region (113) for receiving the transverse locking clips (2) and the connecting part of the water supply pipe (3), while the upper half (12) at one end has a collar (121) for insertion into the lower half (11) so that, after insertion of the transverse locking clips (2) and the water supply pipe (3), the upper and lower halves (11, 12) are connectable in the region of the device producing the spray jets by means of screws (13) or by a snap fit.

10. A hand-held spray head according to one of claims 2 to 9, characterized in that the water supply pipe (3) has at its end located upstream a flange (31), the outer surface of which corresponds approximately to the inner surface of the hand grip (1), stops (311) being provided on the outer surface to limit the depth to which the push buttons (21) can be pushed in.

11. A hand-held spray head according to one of claims 1 to 10, characterized in that in the end face of the hand grip (1) located upstream and/or in the flange (31) there are provided openings (32) to the atmosphere.

## Revendications

1. Douchette comportant au moins un dispositif générateur de jets et une poignée munie d'un raccord amovible pour un flexible d'alimentation en eau de la douchette, caractérisée en ce que la poignée (1) comporte un moyen d'accouplement rapide pour un organe d'enfichage (4) du flexible, avec au moins un étrier de verrouillage transversal (2) pour raccorder l'organe d'enfichage (4) à la poignée (1), cet étrier étant coulissant radialement de manière limitée.

2. Douchette selon la revendication 1, caractérisée en ce que la poignée (1) comporte un tube de passage d'eau (3), séparé pour le dispositif générateur de jets (5), tube dans lequel l'organe d'enfichage (4) s'introduit de manière étanche, frontalement en étant bloqué axialement en position enfichée par l'organe d'accouplement rapide.

3. Douchette selon la revendication 1 ou 2, caractérisée par deux étriers de verrouillage transversal (2) superposés, qui s'introduisent par coulissement à partir d'une ouverture en aval, dans la poignée (1) jusqu'à venir en butée contre une collerette annulaire (111) en étant bloqués axialement dans la position engagée par la face frontale du tuyau d'eau (3), qui est mis en place.

4. Douchette selon l'une des revendications 1 à 3, caractérisée en ce que les étriers de verrouillage transversal (2) traversent chaque fois par un bouton-poussoir (21) un orifice radial (112) respectif réalisé dans la poignée (1).

5. Douchette selon la revendication 4, caractérisée en ce que l'étrier de verrouillage transversal (2) présente en vue de dessus une forme de goutte d'eau et est réalisé en une seule pièce en matière plastique, le bouton-poussoir (21) étant formé sur la zone rétrécie.

6. Douchette selon l'une des revendications 1 à 5, caractérisée en ce que les étriers de verrouillage transversal (2) comportent chaque fois un arc de verrouillage (22) pour venir en prise dans une rainure annulaire (41) de l'organe d'enfichage (4), arc de verrouillage qui présente au niveau d'une face frontale, une patte de guidage (23) en forme de T, une branche de liaison (24) pour la patte de guidage (23) ayant une longueur telle que les deux segments annulaires (25) du second étrier de verrouillage transversal (2), opposé, sont pris par dessus par la patte de guidage (25) de façon que les deux étriers de verrouillage transversal (2) coulissent radialement l'un par rapport à l'autre tout en étant réunis en un paquet fixé axialement.

7. Douchette selon l'une des revendications 4 à 6, caractérisée en ce que les boutons-poussoirs (21) ont une surface d'actionnement sensiblement circulaire d'un diamètre de l'ordre de 10 mm et les deux segments annulaires (25) de l'étrier de verrouillage transversal (2) sont formés sur une moitié de la surface d'actionnement, les deux segments annulaires (25) ayant une zone d'extrémité (251) cylindrique correspondant à la surface-enveloppe de l'orifice radial (112).

8. Douchette selon la revendication 7, caractérisée en ce que dans la zone d'extrémité (251), se trouve un dégagement (252) pour recevoir la branche de liaison (24) de l'autre étrier de verrouillage transversal (2).

9. Douchette selon l'une des revendications 2 à 8, caractérisée en ce que la poignée (1) est formée d'une coquille inférieure et d'une coquille supérieure (11, 12), la coquille inférieure (11) ayant en amont, une zone tubulaire (113) pour recevoir l'étrier de verrouillage transversal (2) et la pièce de raccordement du flexible (3) alors que la coquille supérieure (12) comporte d'une part une collerette (121) pour s'engager dans la coquille inférieure (11) de manière à ce qu'après mise en place des étriers de verrouillage transversal (2) et du tuyau d'eau (3), la coquille inférieure et la coquille supérieure (11, 12) puissent être reliées au niveau-du dispositif générateur de jets de douche (5) à l'aide de vis (13) ou par encliquetage.

10. Douchette selon l'une des revendications 2 à 9 caractérisée en ce que le tuyau d'eau (3) comporte à son extrémité amont, une bride (31) dont la surface enveloppe extérieure correspond sensiblement à la surface enveloppe intérieure de la poignée (1), la surface enveloppe extérieure ayant des butées (311) pour limiter la profondeur d'enfoncement des boutons-poussoirs (21).

11. Douchette selon l'une des revendications 1 à 10, caractérisée en ce que des ouvertures (32) vers l'atmosphère extérieure sont prévues dans la face frontale amont de la poignée (1) et/ou dans la bride (31).
